# EUROPÄISCHE PATENTSCHRIFT

(11) **EP 2 799 636 B1**
(45) Veröffentlichungstag und Bekanntmachung des Hinweises auf die Patenterteilung: **11.10.2017**
(21) Anmeldenummer: 14450017.0
(22) Anmeldetag: 28.04.2014
(51) Int. Cl.: E04B 1/26, E04B 1/82

(54) **Verbindungskörper**
Connection body
Corps de liaison

(30) Priorität: 29.04.2013 AT 3552013
(43) Veröffentlichungstag der Anmeldung: 05.11.2014
(73) Patentinhaber: Vinzenz Harrer GmbH, 8130 Frohnleiten (AT)
(72) Erfinder: Harrer, Vinzenz, AT - 8162 Passail (AT); Kögl, Josef DI, AT - 6020 Innsbruck (AT); Kraler, Anton DI, AT - 6060 Hall in Tirol (AT); Timmers, Ralph DI, AT - 6067 Absam (AT); Buchberger, Peter, AT - 6020 Innsbruck (AT)
(74) Vertreter: Gibler & Poth Patentanwälte KG

(56) Entgegenhaltungen:
- EP-A2- 2 093 334
- DE-A1- 3 801 735
- DE-U1-202012 004 845
- FR-A1- 2 952 947

## Beschreibung

Die Erfindung betrifft einen Verbindungskörper zum Herstellen einer Verbindung zwischen einem ersten Gebäudebauelement und einem zweiten Gebäudebauelement gemäß dem Oberbegriff des Patentanspruches 1.

Im modularen Haus-, Container-, Dach- und Tragwerksbau spielen Schraubverbindungen aufgrund einer Reihe von Vorteilen, beispielsweise, dass diese kostengünstig, einfach, verlässlich, technisch bestens dokumentiert und mit einer Fülle Normenwerken unterfüttert sind, nach wie vor eine zentrale Rolle. Bei den hierfür bevorzugt verwendeten Baustoffen, beispielsweise Massivholz, Brettsperrholz, Rigips, Faserplatten, Kunststoffen und dergleichen ist die Krafteinleitung von den Schraubenköpfen in die Bauteile jedoch problematisch, da bei diesen vergleichsweise weichen Materialien die Schraubenköpfe in das Material eintauchen und die genannten Materialien unter dem von der Auflagefläche der Schraubenköpfe generierten Druck mehr nachgeben und sich mehr plastisch deformieren, als beispielsweise Metall.

Dieser Nachteil ist durch aus härteren Materialien gefertigte bekannte Beschläge wie beispielsweise Schraubwinkel oder Lochbandbeschläge, welche den Druck der Schraubenköpfe auf eine größere Fläche am Bauteil verteilen, zwar behebbar.

Jedoch weisen auch solche aus Schrauben plus Beschlag bestehende Verbindungslösungen noch eine Reihe von Nachteilen auf. So sind beispielsweise bei solchen "Schrauben plus Beschlag"-Verbindungen sowohl die Positionierungsgenauigkeit als auch der Positionierungskomfort suboptimal, weil die zu verbindenen Bauteile durch zusätzliche Hilfsmittel wie beispielsweise provisorisch montierte Positionierungsleisten oder -klötze in der vorgesehenen exakten Montageposition gehalten werden müssen, bevor die für die finale Verbindung vorgesehenen Schrauben und Beschläge angebracht werden. Insbesondere für im Holzbau verwendete Bauelemente gibt es inzwischen eine

Reihe von hoch entwickelten Verbindungssystemen, die aus zwei Beschlägen bestehen, wobei der erste dieser beiden Beschläge am ersten der zu verbindenden Bauteile montiert wird, der zweite Beschlag am zweiten Bauteil montiert wird und wobei diese beiden Beschläge so ausgebildet sind, dass sie mit Hinterschnitten beispielsweise in Form von Schwalbenschwänzen formschlüssig ineinander gesteckt werden können. Solche Steckverbinder mit formschlüssig ineinander steckbaren Hinterschnitten eignen sich besonders für Balkenkonstruktionen und für Anwendungsfälle mit hoher Last. Ein gravierender Nachteil solcher Steckverbinder ist jedoch der Umstand, dass die ineinander steckbaren formschlüssigen Segmente präzise ineinander geführt werden müssen, was speziell bei größeren Bauelementen wie beispielsweise Wandsegmenten, bei denen mehrere Verbinder pro Bauteil nötig sind, den Montagekomfort deutlich mindert. Weiters kommen bei solchen Steckverbindern die formschlüssig ineinander steckbaren Segmente zwischen den Verbindungsflächen der beiden zu verbindenen Bauteile zu liegen. Dadurch entsteht zwischen den beiden Bauteilen zwangläufig ein von der Topologie des Steckverbinders vorgegebener Luftspalt, was bei vielen Anwendungen, beispielsweise Wand- oder Deckenkonstruktionen, einen gravierenden Nachteil darstellt.

Aus der EP 2 093 334 A2 sind zwei identisch ausgebildete Verbindungskörper bekannt, welche jeweils mit einem der beiden Gebäudeelement befestigt werden, und für das Verbinden der beiden Gebäudeelemente zusammengeführt werden. Aus der DE 20 2012 004 845 U1 ist ein Verbindungskörper zum Herstellen einer Verbindung zwischen einem ersten Einzelbauteil und einem zweiten Einzelbauteil bekannt. Der Verbindungskörper weist einen Eingriffsansatz und einen Auflageabschnitt auf, wobei der Eingriffsansatz in eine Ausnehmung des zweiten Einzelbauteils angeordnet ist, während der Auflageabschnitt mit einer Auflagefläche auf dem zweiten Einzelbauteil aufliegt.

Aus der DE 38 01 735 A1 ist eine schallgedämmte Unterlagescheibe bekannt.

Aus der FR 2 952 947 A1, die die Merkmale des Oberbegriffs des Anspruchs 1 offenbart, ist eine mehrteilige Verbindungsvorrichtung zum Verbinden zweier Gebäudebauelemente bekannt. Die Verbindungsvorrichtung weist einen U-förmigen Verbinder auf, welcher längliche Durchbrechungen aufweist. Weiters weist die Verbindungsvorrichtung zwei Führungen mit einem L-förmigen Querschnitt auf, wobei in einer Kante der Führungen Durchgangsöffnungen für die Schrauben sind. Die Schraube wird zuerst durch die Durchbrechungen des Verbinders und anschließend durch die Durchgangsöffnungen der Führungen in einen zu verbindenden Bauteil geschraubt.

Nachteilig ist daher, dass bekannte Verbindersysteme oft umständlich in der Handhabung und beim Aufbau sind. Durch diese Nachteile gestaltet sich der Aufbau zeit- und personalintensiv.

Aufgabe der Erfindung ist es daher, einen Verbindungskörper der eingangs genannten Art anzugeben, mit welchem die genannten Nachteile vermieden werden können, und mit welchem eine Verbindung zwischen zwei Gebäudebauelemente einfach und schnell erfolgen kann.

Erfindungsgemäß wird dies durch die Merkmale des Patentanspruches 1 erreicht. Dadurch ergibt sich der Vorteil, dass eine zuverlässige Verbindung zweier Gebäudebauelemente auch von wenigen Personen in kurzer Zeit erreicht werden kann. Durch die Wahl des Durchtrittspunktes der Verbindungsschraube in der Nähe zu der Kante zwischen der Kontaktfläche und der Seitenfläche kann eine gute Krafteinleitung erreicht werden. Durch die geringe Hebelwirkung führen Biegemomente zwischen den verbundenen Gebäudeelemente nur zu geringen Kraftspitzen, welche sich gut über die Kontaktfläche verteilen. Da ein Verbindungskörper ausreichend ist, entfällt weiters das Problem der passgenauen Anordnung zweier verschiedener Beschläge auf den unterschiedlichen Gebäudebauelementen, welche bei der Montage ineinander geführt werden müssen. Weiters hat der Verbindungskörper einen geringen Platzbedarf, weshalb dieser gut eingesetzt werden kann, ohne beispielsweise mit dem Innenausbau zu kollidieren. Außerdem ist durch den geringen Platzbedarf der Verbindungskörper besonders gut für eine versenkte Bauweise des Verbindungskörpers geeignet. Der Verbindungskörper ist weiters besonders gut dafür geeignet, bei unterschiedlichen Verbindungsgeometrien eingesetzt zu werden, beispielsweise Stoß an Stoß Verbindungen, Eck-Verbindungen oder T-Verbindungen, wobei ein und derselbe Verbindungskörper bei allen genannten Geometrien eingesetzt werden kann.

Die Erfindung betrifft weiters eine Verbindung zwischen einem ersten Gebäudebauelement und einem zweiten Gebäudebauelement nach Anspruch 9. Die Unteransprüche betreffen weitere vorteilhafte Ausgestaltungen der Erfindung. Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform eines Verbindungskörpers in Aufsicht;
Fig. 2 bis 4 die erste bevorzugte Ausführungsform eines Verbindungskörpers bei unterschiedlichen Ausführungsformen der Verbindung in Seitenansicht;
Fig. 5 die erste bevorzugte Ausführungsform eines Verbindungskörpers mit einem Positionierkörper in Aufsicht;
Fig. 6 und 7 eine zweite bevorzugte Ausführungsform der Verbindung als Explosionsdarstellung aus unterschiedlichen Blickwinkeln;
Fig. 8 eine dritte bevorzugte Ausführungsform einer Verbindung in Seitenansicht;
Fig. 9 und 10 eine erste bevorzugte Ausführungsform eines Verbindungssystems als axonometrische Darstellung aus unterschiedlichen Blickwinkeln;
Fig. 11 und 12 eine zweite bevorzugte Ausführungsform des Verbindungskörpers aus unterschiedlichen Blickwinkeln;
Fig. 13 eine vierte bevorzugte Ausführungsform der Verbindung als Schnitt in Seitenansicht;
Fig. 14 eine fünfte bevorzugte Ausführungsform der Verbindung als Schnitt in Seitenansicht;
Fig. 15 eine sechste bevorzugte Ausführungsform der Verbindung als Schnitt in Seitenansicht;
Fig. 16 eine dritte bevorzugte Ausführungsform des Verbindungskörpers in Aufsicht;
Fig. 17 eine vierte bevorzugte Ausführungsform des Verbindungskörpers in Aufsicht;
Fig. 18 eine fünfte bevorzugte Ausführungsform des Verbindungskörpers als Schnitt in Seitenansicht;
Fig. 19 eine sechste bevorzugte Ausführungsform des Verbindungskörpers als Schnitt in Seitenansicht;
Fig. 20 eine siebente bevorzugte Ausführungsform der Verbindung als Schnitt in Seitenansicht;
Fig. 21 eine achte bevorzugte Ausführungsform der Verbindung als Schnitt in Seitenansicht;
Fig. 22 eine neunte bevorzugte Ausführungsform der Verbindung als Schnitt in Seitenansicht;
Fig. 23 eine zehnte bevorzugte Ausführungsform der Verbindung als Schnitt in Seitenansicht;
Fig. 24 eine elfte bevorzugte Ausführungsform der Verbindung in Aufsicht;
Fig. 25 ein Schnitt entlang der Linie A in Fig. 24;
Fig. 26 ein Schnitt entlang der Linie B in Fig. 24;
Fig. 27 eine zwölfte bevorzugte Ausführungsform der Verbindung als Schnitt in Seitenansicht;
Fig. 28 eine dreizehnte bevorzugte Ausführungsform der Verbindung als Schnitt in Seitenansicht;
Fig. 29 eine vierzehnte bevorzugte Ausführungsform der Verbindung als Schnitt in Seitenansicht;
Fig. 30 eine fünfzehnte bevorzugte Ausführungsform der Verbindung als Schnitt in Seitenansicht;

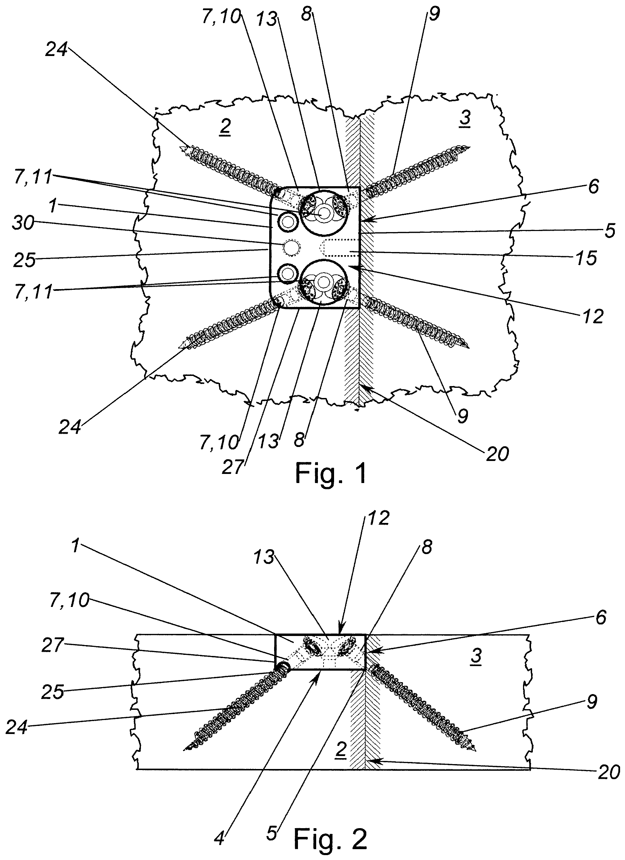

Die Fig. 1 bis 30 zeigen unterschiedliche Ausführungsformen eines Verbindungskörpers 1 zum Herstellen einer Verbindung zwischen einem ersten Gebäudebauelement 2 und einem zweiten Gebäudebauelement 3. Das erste Gebäudebauelement 2 und/oder das zweite Gebäudebauelement 3 können insbesondere plattenförmig oder balkenförmig sein. Weiters können das erste Gebäudebauelement 2 und/oder das zweite Gebäudebauelement 3 vorgefertigte Fertigbauteile sein, beispielsweise vorgefertigte Wand - oder Deckensegmente. Das erste Gebäudebauelement 2 und/oder das zweiten Gebäudebauelement 3 können beispielsweise Massivholz, Brettsperrholz, Rigips, Faserplatten, Kunststoffen und dergleichen umfassen.

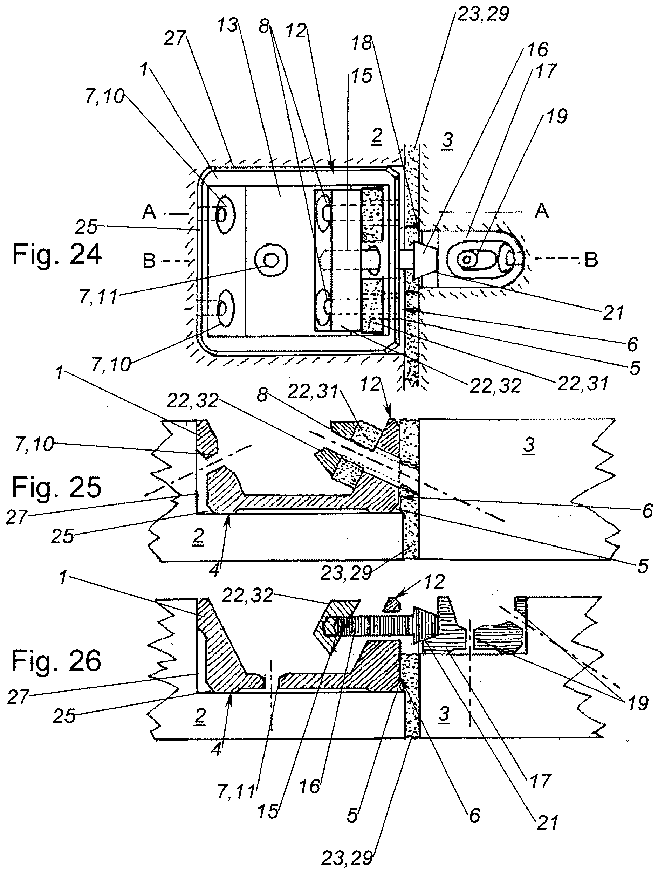

Vorgesehen ist, dass der Verbindungskörper 1 eine Kontaktfläche 4 zum Aufliegen auf dem ersten Gebäudebauelement 2 aufweist, wobei an einer ersten Kante 5 der Kontaktfläche 4 eine eine erste Ebene aufspannende erste Seitenfläche 6 angrenzt, wobei eine Befestigungseinrichtung 7 zum Verbinden des Verbindungskörpers 1 mit dem ersten Gebäudebauelement 2 vorgesehen ist. Die Kontaktfläche 4 ist zum Aufliegen auf dem ersten Gebäudebauelement 2 vorgesehen, wobei diese insbesondere dazu ausgelegt sein kann, Druckkräfte von dem Verbindungskörper 1 an das erste Gebäudebauelement 2 weiterzuleiten. Die Kontaktfläche 4 kann als eine durchgehende ebene Fläche ausgebildet sein. Alternativ kann vorgesehen sein, dass, wie in den Fig. 25 und 26 dargestellt, die Kontaktfläche 4 aus mehreren Teilflächen besteht. Der Verbindungskörper 1 kann mittels einer Befestigungseinrichtung 7 an dem ersten Gebäudebauelement 2 befestigt sein. Die Kontaktfläche 4 ist an einer ersten Seite von einer ersten Kante 5 berandet, welche erste Kante 5 insbesondere gerade verlaufen kann.

Die erste Seitenfläche 6 kann insbesondere eben ausgebildet sein. Weiters kann vorgesehen sein, dass in Projektion normal zu der ersten Ebene die Fläche der erste Seitenfläche 6 mindestens 50%, insbesondere mindesten 80%, der gesamten projizierten Fläche des Verbindungskörpers 1 einnimmt.

Weiters kann vorgesehen sein, dass der gesamte Verbindungskörper 1 lediglich auf einer Seite der ersten Ebene angeordnet ist. Dies bedeutet, dass die erste Ebene am Verbindungskörper 1 vorbei führt, und dass insbesondere der die Verbindungskörper 1 erste Ebene nicht durchdringt. Dadurch ergibt sich der Vorteil, dass keine Teile des Verbindungskörpers 1 in einem eingebauten Zustand in dem ersten Gebäudeelement 2 aus diesem hervorragen, wodurch die Handhabung einfacher und sicherer wird.

Die erste Kante 5 kann hierbei, wie fertigungstechnisch üblich, abgerundet, oder wie in Fig. 25 und Fig. 26 dargestellt, abgeschrägt sein. Weiters kann vorgesehen sein, dass die Kante 5 durchgehend oder unterbrochen ist. Bei einer abgerundeten oder abgeschrägten Kante 5 kann vorgesehen sein, dass die Kante 5 jene gedachte Linie ist, an welcher sich die erste Ebene mit einer durch die an der Kante 5 angrenzenden Kontaktfläche 4 aufgespannten Ebene schneidet.

Der Verbindungskörper 1 kann insbesondere einen Grundkörper, insbesondere aus einem belastbaren und/oder starren Material, beispielsweise Metall oder Kunststoff, aufweisen. Auf diesem Grundkörper können weitere Elemente, beispielsweise weiche und nachgiebige Dämmelemente angeordnet sein. Da der Grundkörper vorzugsweise unnachgiebig ist, kann die Kontaktfläche 4 und die erste Seitenfläche 6 insbesondere als Flächen des Grundkörpers des Verbindungskörper 1 ausgebildet sein.

Weiters kann vorgesehen sein, dass der Verbindungskörper 1 einstückig ausgebildet ist, also lediglich aus dem Grundkörper besteht. Derartige einstückige Verbindungskörper 1 sind beispielsweise in Fig. 1 bis Fig. 19 geoffenbart.

Vorgesehen ist weiters, dass wenigstens eine eine Verbindungsschraubenführungsmittelachse aufweisende Verbindungsschraubenführung 8 mit einem ersten Durchmesser zur Aufnahme einer Verbindungsschraube 9 vorgesehen ist. Die Verbindungsschraubenführung 8 dient zur Aufnahme und insbesondere auch zur Führung einer Verbindungsschraube 9, welche Verbindungsschraube 9 zur Verbindung des Verbindungskörpers 1 mit dem zweiten Gebäudeelement 3 vorgesehen ist. Die Verbindungsschraubenführung 8 weist eine Verbindungsschraubenführungsmittelachse auf, welche die Mittelachse der Verbindungsschraubenführung 8 ist. Eine Mittelachse einer in der Verbindungsschraubenführung 8 angeordnete Verbindungsschraube 9 wird im Wesentlichen ebenfalls entlang der Verbindungsschraubenführungsmittelachse verlaufen. Insbesondere kann weiters vorgesehen sein, dass die Verbindungsschraubenführung 8 gewindefrei ist. Der erste Durchmesser kann insbesondere im Bereich zwischen 6 mm und 14 mm sein. Hierbei kann die Verbindungsschraubenführung 8 insbesondere zur Aufnahme einer M6 bis M14 Schraube ausgebildet sein. Die Verbindungsschraubenführung 8 kann auch zur Aufnahme einer zölligen Verbindungsschraube 9 ausgebildet sein.

Vorgesehen ist, dass ein Abstand eines Schnittpunktes der Verbindungsschraubenführungsmittelachse mit der ersten Ebene von der ersten Kante 5 kleiner als ein Fünffaches des ersten Durchmessers ist. Hierbei kann die Verbindungsschraubenführungsmittelachse insbesondere durch die erste Seitenfläche 6 oder die Kontaktfläche 4 durchführen. Durch das nahe Vorbeiführen der Verbindungsschraube 9 an der ersten Kante 5 kann hierbei eine besonders vorteilhafte Krafteinwirkung zwischen ersten Gebäudeelement 2, Verbindungskörper 1 und zweiten Gebäudeelement 3 erreicht werden, wobei insbesondere Kippmomente um die erste Kante 5 gering gehalten werden können. Weiters ist dadurch eine besonders platzsparende und einfach montierbare Bauweise möglich.

Weiters kann bevorzugt vorgesehen sein, dass bei mehreren Verbindungsschraubenführungen alle Verbindungsschraubenführungsmittelachsen diesen maximalen Abstand zu ersten Kante 5 aufweisen, und dass insbesondere alle Verbindungsschraubenführungsmittelachsen den gleichen Abstand zu der ersten Kante 5 aufweisen.

Besonders bevorzugt kann vorgesehen sein, dass die Verbindungsschraubenführungsmittelachse durch die erste Seitenfläche 6 führt. Hierbei kann die Verbindungsschraube 9 an dem ersten Gebäudeelement 2 vorbei führen, wodurch die Montage zusätzlich erleichtert wird, da der Verbindungskörper 1 nicht beim Durchschrauben der Verbindungsschraube 9 abgehoben wird.

Besonders bevorzugt kann weiters vorgesehen sein, dass der Abstand des Schnittpunktes der Verbindungsschraubenführungsmittelachse mit der ersten Ebene von der ersten Kante 5 kleiner als ein Dreifaches, insbesondere kleiner als ein Einfaches, des ersten Durchmessers ist. Dadurch kann die Wirkung weiters verbessert werden.

In den Figuren sind die beiden Gebäudebauelemente 2,3 zur besseren Verständlichkeit transparent dargestellt.

Gemäß den bevorzugten Ausführungsformen in Fig. 1 bis 14, 18 sowie 20 bis 30 kann insbesondere vorgesehen sein, dass die Kontaktfläche 4 zu der ersten Seitenfläche 6 orthogonal ist, und die erste Kante 5 daher einen rechten Winkel einschließt.

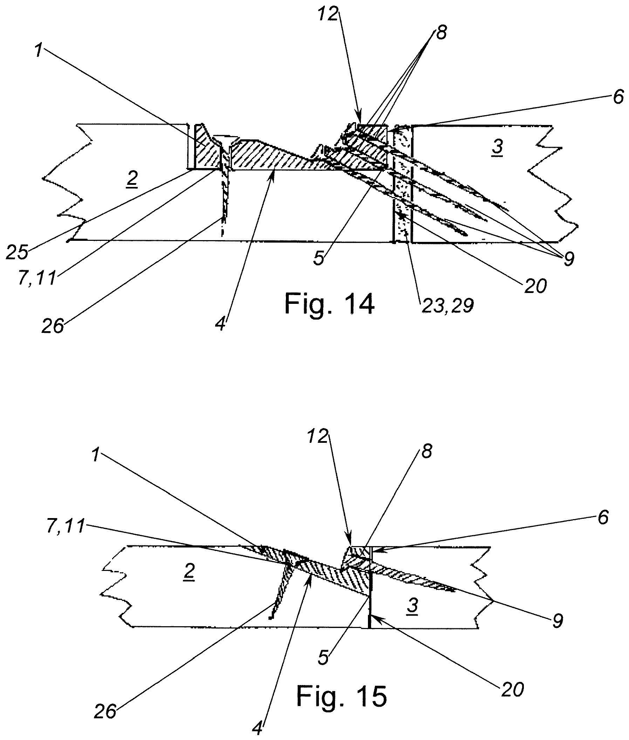

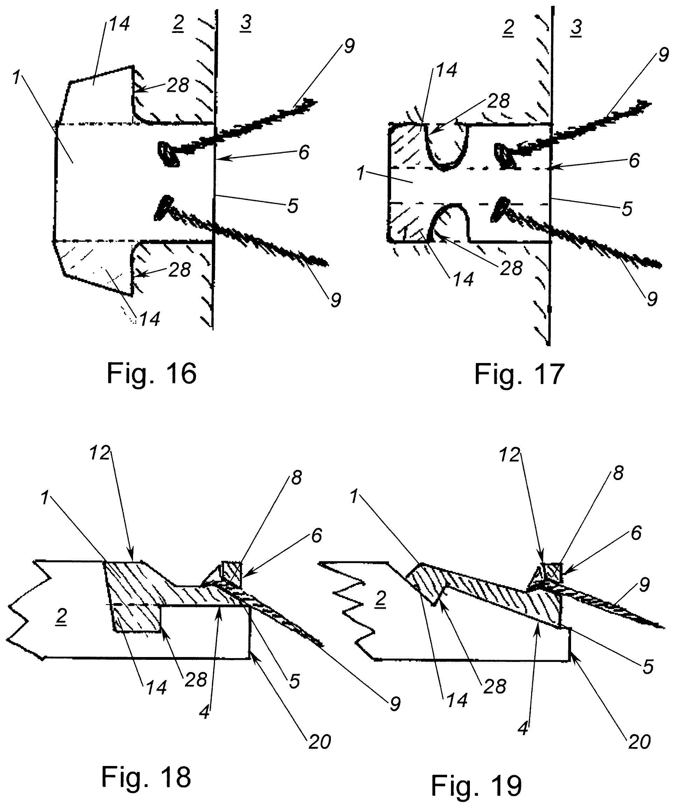

Gemäß den Ausführungsformen in Fig. 15 und 19 kann die erste Kante 5 alternativ einen spitzen Winkel ausbilden.

Weiters kann ein Verbindungssystem mit einem Verbindungskörper 1 vorgesehen sein.

Insbesonders kann weiters eine Verbindung zwischen einem ersten Gebäudebauelement 2 und einem zweiten Gebäudebauelement 3 vorgesehen sein, wobei der Verbindungskörper 1 mit der Kontaktfläche 4 zumindest mittelbar, insbesondere unmittelbar, auf dem ersten Gebäudebauelement 2 aufliegt und mit der Befestigungseinrichtung 7 mit dem ersten Gebäudebauelement 2 befestigt ist, wobei eine in der Verbindungsschraubenführung 8 angeordnete Verbindungsschraube 9 in das zweite Gebäudebauelement 3 führt. Hierbei kann die Verbindungsschraube 9 insbesortdere direkt von dem Verbindungskörper 1 in das zweite Gebäudebauelement 3 führen.

Die Verbindungsschrauben können weiters insbesondere selbstschneidend und/oder selbstbohrend ausgebildet sein, beispielsweise als selbstbohrende Holzschraube, wobei die Montage weiters erleichtert werden kann.

Insbesondere kann vorgesehen sein, dass die Verbindungsschraubenführungsmittelachse mit der ersten Ebene einen Winkel zwischen 15° und 75°, insbesondere zwischen 30° und 60°, einschließt. Durch diese schräge Anordnung der Verbindungsschraubenführungsmittelachse zur ersten Ebene kann ein besonders guter Halt erreicht werden.

Besonders bevorzugt kann vorgesehen sein, dass ein Normalabstand eines im Verbindungskörper 1 führenden Teiles der Verbindungsschraubenführungsmittelachse zur ersten Ebene mit einem zunehmenden Normalabstand zu einer zweiten Ebene, welche zweite Ebene durch die erste Kante 5 führt und orthogonal zur ersten Ebene ist, zunimmt. Hierbei kann die Verbindungsschraube 9 - von einer der Kontaktfläche 4 gegenüberliegenden Seite betrachtet - schief nach unten in das zweite Gebäudeelement 3 geschraubt werden, wodurch beispielsweise eine versenkte Bauweise der Verbindung mit dem Verbindungskörper gut möglich ist. Weiters können dadurch Zugkräfte auf die Verbindungsschraube 9 gut in Druckkräfte auf die Kontaktfläche 4 umgewandelt werden.

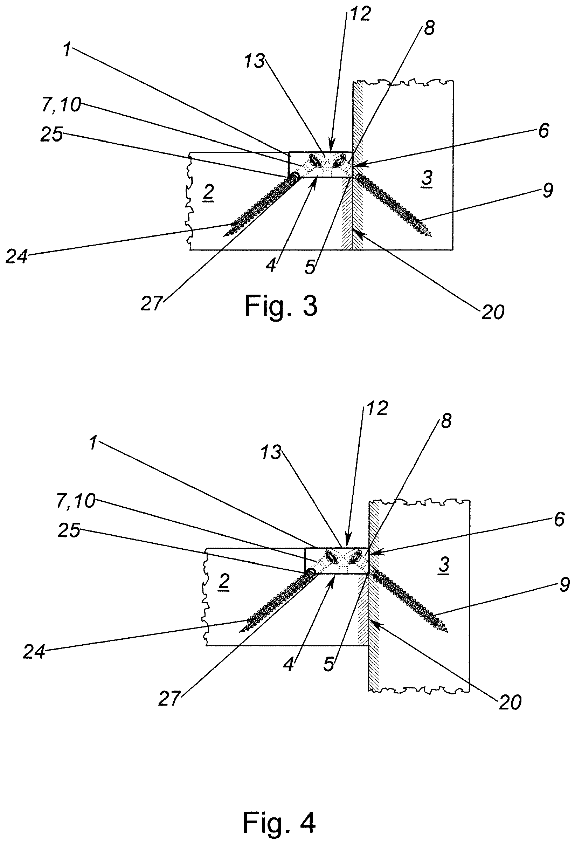

In den Fig. 2 bis 4 sind unterschiedliche Ausführungsformen der Verbindung mit einem Verbindungskörper 1 dargestellt. Hierbei zeigt Fig. 2 eine Stoß an Stoß Verbindung, Fig. 3 eine Eck-Verbindung und Fig. 4 eine T-Verbindung. Wie insbesondere in Fig. 3 und 4 erkennbar ist, kann der Verbindungskörper 1 bei einer Eck-Verbindung gut im Inneren der Ecke angeordnet werden, wodurch beispielsweise die Montage von Wandsegmenten bei einem mehrstöckigen Gebäude auch ohne Gerüst verlaufen kann, da die Verbindung von innen erfolgen kann.

Weiters kann besonders bevorzugt vorgesehen sein, dass die Befestigungseinrichtung 7 wenigstens eine eine Befestigungsschraubenführungsmittelachse aufweisende Befestigungsschraubenführung 10 aufweist, und dass die Befestigungsschraubenführungsmittelachse mit der ersten Ebene einen Winkel kleiner als 80°, insbesondere zwischen 30° und 60°, einschließt. Die Befestigungsschraubenführung 10 ist zur Aufnahme einer Befestigungsschraube 24 vorgesehen, wobei die Befestigungsschraube 24 den Verbindungskörper 1 an dem ersten Gebäudeelement 2 befestigt. Durch die schräge Anordnung der Befestigungsschraube 24 kann die Befestigungsschraube 24 besonders gut Zugkräfte, welche von der Verbindungsschraube 9 auf den Verbindungskörper 1 ausgeübt werden, aufnehmen.

Hierbei kann insbesondere vorgesehen sein, dass die Verbindungsschraubenführungen 8 und die Befestigungsschraubenführungen 10 paarweise angeordnet sind, wobei insbesondere die Befestigungsschraubenführungen 10 entlang einer parallel zur ersten Ebene verlaufenden Spiegelebene spiegelgleich zu den Verbindungsschraubenführungen 8 sind.

Weiters kann insbesondere vorgesehen sein, dass die Verbindungsschraubenführungsmittelachse zu der Befestigungsschraubenführungsmittelachse einer benachbarten Befestigungsschraubenführung 10 einen stumpfen Winkel einschließt. Dieser stumpfe Winkel kann insbesondere zwischen 90° und 120° betragen. Dadurch kann eine besonders vorteilhafte Krafteinleitung erreicht werden.

Weiters kann vorgesehen sein, dass ein Durchmesser der Befestigungsschraubenführung 10 im Wesentlichen dem ersten Durchmesser, also dem Durchmesser der Verbindungsschraubenführung 8, entspricht.

Besonders bevorzugt kann vorgesehen sein, dass die Kontaktfläche 4 eine der ersten Kante 5 gegenüberliegende zweite Kante 25 aufweist, und dass der Abstand zwischen der zweiten Kante 25 und der Befestigungsschraubenführungsmittelachse kleiner ist als das Fünffache, insbesondere kleiner als das Dreifache, besonders bevorzugt kleiner als das Einfache, des Durchmessers der Befestigungsschraubenführung 10.

Weiters kann vorgesehen sein, dass die Befestigungseinrichtung 7 wenigstens eine eine Positionierungsschraubenführungsmittelachse aufweisende Positionierungsschraubenführung 11 aufweist, und dass die Positionierungsschraubenführungsmittelachse zu der Kontaktfläche 4 normal ist. Die Positionierungsschraubenführung 11 ist zur Aufnahme einer Positionierungsschraube 26 vorgesehen. Durch die Positionierungsschrauben 26, welche im Wesentlichen normal zu der Kontaktfläche 4 verlaufen, kann der Verbindungskörper bei der Montage leicht lagerichtig am ersten Gebäudeteil 2 befestigt werden, da bei Einschrauben der Positionierungsschrauben 26 keine Querkräfte entstehen, welche den Verbindungskörper 1 verschieben könnten. Anschließend können insbesondere die Befestigungsschrauben 24 eingeschraubt werden.

Fig. 14 und 15 zeigen Ausführungsformen des Verbindungskörpers 1, bei welchen die Befestigungseinrichtung 7 lediglich Positionierungsschraubenführungen 11 aufweist.

Besonders bevorzugt kann vorgesehen sein, dass der Verbindungskörper 1 eine der Kontaktfläche 4 gegenüberliegende Deckfläche 12 aufweist, und dass die Verbindungsschraubenführungsmittelachse die Deckfläche 12, insbesondere in einem Winkel zwischen 15° und 75°, insbesondere zwischen 30° und 60°, schneidet. Die Deckfläche 12 ist hierbei jene Fläche, welche den Verbindungskörper 1 an einer der Kontaktfläche 4 gegenüberliegenden Seite berandet.

Hierbei kann die Deckfläche 12 insbesondere zu einem Großteil in einer, orthogonal zur ersten Ebene stehenden, Deckebene angeordnet sein. Weiters kann auch die Befestigungsschraubenführungsmittelachse die Deckfläche 12 schneiden. Hierbei kann der Verbindungskörper 1 auch in einem versenkten Zustand gut verschraubt werden.

Weiters kann vorgesehen sein, dass die Deckfläche 12 parallel zur Kontaktfläche 4 verläuft.

Besonders bevorzugt kann vorgesehen sein, dass der Verbindungskörper 1 im Wesentlichen die Form eines Zylinders aufweist. Hierbei kann insbesondere vorgesehen sein, dass die Kontaktfläche 4 eine Grundfläche des Zylinders bildet. Weiters kann vorgesehen sein, dass eine Höhe der Seitenfläche 6 einer Höhe des Zylinders entspricht.

Fig. 1 bis 10 sowie 20 bis 30 zeigen beispielsweise bevorzugte Ausführungsformen des Verbindungskörpers, bei welcher die Kontaktfläche 4, welche auch die Grundfläche des Zylinders darstellt, im Wesentlichen rechteckförmig ist.

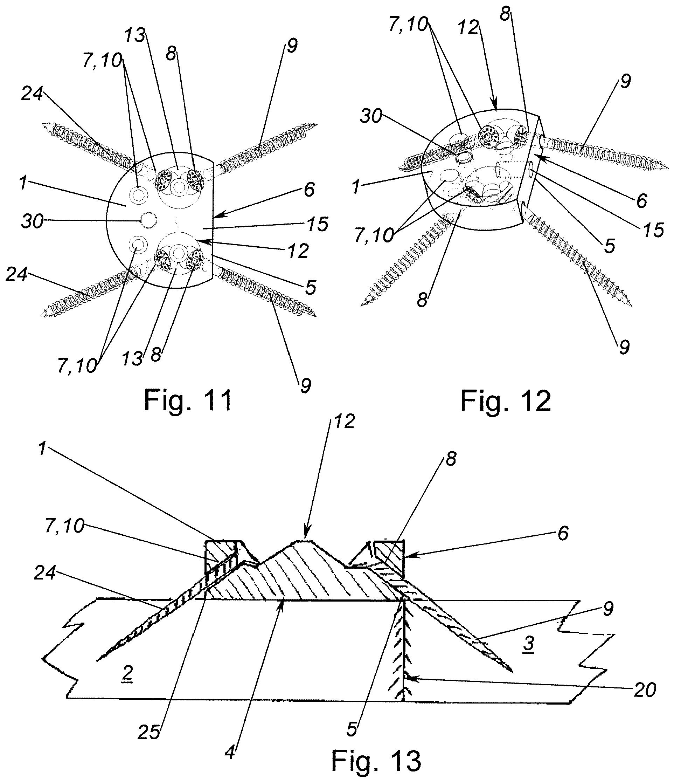

Gemäß der bevorzugten Ausführungsform in Fig. 11 und 12 kann die Kontaktfläche 4, welche auch die Grundfläche des Zylinders darstellt, auch die Form eines Kreissegmentes haben.

Weiters kann vorzugsweise vorgesehen sein, dass der Verbindungskörper 1 Tragemittelaufnahmen 30 aufweist. Die Tragemittelaufnahme 30 dient zur lösbaren Befestigung von Tragemitteln, beispielsweise eines Tragegriffes oder eines Transporthakens. Die Tragemittelaufnahme 30 kann besonders bevorzugt als ein Gewindebohrloch ausgebildet sein, in welches das Tragemittel eingeschraubt werden kann. Insbesondere kann vorgesehen sein, dass die Tragemittelaufnahme 30 an der Deckfläche 12 angeordnet ist. Hierbei kann das erste Gebäudebauelement 2 mit einem montierten Verbindungskörper 1 einfach mittels des Tragemittels transportiert und gehandhabt werden, wobei vor oder nach der Montage das Tragemittel wieder entfernt werden kann.

Bei der Verbindung kann besonders bevorzugt vorgesehen sein, dass das erste Gebäudebauelement 2 eine dem zweiten Gebäudebauelement 3 zugewandte Stoßfläche 20 aufweist, und dass eine durch die Stoßfläche 20 aufgespannte Ebene an dem Verbindungskörper 1 vorbei führt. Hierbei ist der Verbindungskörper 1 derart angeordnet, dass dieser die durch die Stoßfläche 20 des ersten Gebäudebauelementes 2 aufgespannte Ebene nicht durchdringt. Die Verbindungsschraube 9 durchdringt hierbei die durch die Stoßfläche 20 aufgespannte Ebene. Dabei können über die Stoßfläche 20 hinausragende Verbindungskörper 1 vermieden werden, wodurch die Handhabe bei der Montage vereinfacht wird.

Insbesondere kann vorgesehen sein, dass die erste Seitenfläche 6 im Wesentlichen in der durch die Stoßfläche 20 aufgespannten Ebene angeordnet ist, wodurch der Verbund vom ersten Gebäudebauelement 2 und vom Verbindungskörper 1 schlüssig am zweiten Gebäudebauelement 3 anliegen kann.

Alternativ kann vorgesehen sein, dass die Stoßfläche 20 bezüglich der ersten Ebene gekippt ist, beispielsweise bei einem Gehrungsschnitt.

Weiters kann vorgesehen sein, dass das erste Gebäudebauelement 2 eine Umhüllende aufweist, und dass der Verbindungskörper 1 innerhalb der Umhüllenden angeordnet ist. Hierbei kann der Verbindungskörper 1 in einer Aussparung 27 des ersten Gebäudebauelementes 2 angeordnet sein, welche Aussparung 27 beispielsweise in das Gebäudebauelement 2 eingesägt, eingeschnitten oder eingefräst sein kann. Dadurch kann der Verbindungskörper 1 gut an dem ersten Gebäudebauelement 2 vormontiert werden, wobei das erste Gebäudebauelement 2 weiterhin gut stapelbar bleibt. Weiters weisen derart verbundenen Gebäudebauelemente eine ebene Begrenzungsfläche ohne hervorstehende Verbindungskörper 1 auf.

Hierbei kann weiters vorgesehen sein, dass die Deckfläche 12 fluchtend mit oder innerhalb der Umhüllenden des ersten Gebäudeelementes 2 angeordnet ist.

Weiters kann vorgesehen sein, dass die wenigstens eine Verbindungsschraubenführungsmittelachse mit einer an der Stoßfläche angrenzenden Ebene der Umhüllenden des ersten Gebäudebauelementes 2 einen Winkel zwischen 15° und 75°, insbesondere zwischen 30° und 60°, einschließt.

Weiters kann vorgesehen sein, dass in der Deckfläche 12 wenigstens eine Ausnehmung 13 ausgebildet ist, und das die wenigstens eine Verbindungsschraubenführung 8 in der Ausnehmung 13 mündet. Weiters kann vorgesehen sein, dass die Befestigungsschraubenführung 10 ebenfalls in der Ausnehmung 13 mündet. Insbesondere kann vorgesehen sein, dass pro Ausnehmung 13 eine Verbindungsschraubenführung 8 und eine Befestigungsschraubenführung 10 mündet. Durch die Ausnehmung 13 kann erreicht werden, dass Schraubenköpfe der Verbindungsschrauben 9 und der Befestigungsschraube 24, insbesondere wenn diese schräg verschraubt werden, nicht über die Deckebene hinaus ragen.

Alternativ kann wie in Fig. 13 dargestellt vorgesehen sein, dass der Verbindungskörper 1 auf dem ersten Gebäudebauelement 2 aufgesetzt montiert ist.

Gemäß den in Fig. 16 bis 19 dargestellten Ausführungsformen kann bevorzugt vorgesehen sein, dass der Verbindungskörper 1 wenigstens einen Hinterschneidungsfortsatz 14 aufweist. Hierbei kann der Verbindungskörper 1 insbesondere derart ausgebildet sein, dass bei einer Anordnung des Verbindungskörpers 1 in der Aussparung 27 ein Teil des Verbindungskörpers 1 einen Teil des ersten Gebäudebauelementes 2 hinterschneidet, wobei auftretende Zugkräfte in Richtung der ersten Seitenfläche 6 durch den wenigstens einen Hinterschneidungsfortsatz 14 an das erste Gebäudebauelement 2 weitergeleitet werden können. Der wenigstens eine Hinterschneidungsfortsatz 14 kann insbesondere eine Zugkräfteaufnahmefläche 28 aufweisen, welche Zugkräfteaufnahmefläche 28 im Wesentlichen parallel zur ersten Ebene oder normal zu der Kontaktfläche 4 angeordnet ist. Der wenigstens eine Hinterschneidungsfortsatz 14 kann insbesondere an einer der ersten Seitenfläche gegenüberliegenden Seite des Verbindungskörpers angeordnet sein.

Insbesondere kann weiters vorgesehen sein, dass der Verbindungskörper 1 eine durch einen Mittelpunkt der ersten Kante 5 führende und zur ersten Kante 5 normal stehende Symmetrieebene aufweist, und dass die Symmetrieebene zwischen zwei spiegelgleichen Teilen des Verbindungskörpers 1 angeordnet ist. Hierdurch kann eine gleichmäßige Krafteinleitung erreicht werden. Weiters kann die Handhabung des Verbindungskörpers 1 vereinfacht werden.

Weiters kann vorgesehen sein, dass die Verbindungsschraubenführungsmittelachse gegenüber der Symmetrieebene einen spitzen Winkel einschließt. Insbesondere können die Verbindungsschraubenführungsmittelachsen derart angeordnet sein, dass die Spitzen der Verbindungsschrauben 9 von der Symmetrieebene weg weisen.

Insbesondere kann vorgesehen sein, dass der Verbindungskörper 1 wenigstens zwei, insbesondere zwei, Verbindungsschraubenführungen 8, und besondres bevorzugt wenigstens zwei, insbesondere zwei, Befestigungsschraubenführungen 10 aufweist.

Besonders bevorzugt kann vorgesehen sein, dass das Verbindungssystem einen Positionierkörper 16 und einen Gegenverbindungskörper 17 aufweist, dass an der ersten Seitenfläche 6 eine Positionierkörperaufnahme 15 zur Aufnahme eines Positionierkörpers 16 angeordnet ist, dass der Gegenverbindungskörper 17 eine eine weitere Positionierkörperaufnahme 21 aufweisende Positionierungsfläche 18 und eine weitere Befestigungseinrichtung 19 zum Verbinden des Gegenverbindungskörpers 17 mit dem zweiten Gebäudebauelement 3 aufweist. Der Gegenverbindungskörper kann hierbei dazu vorgesehen sein, am zweiten Gebäudebauelement 3 befestigt zu werden und dient als Positionierungshilfe für den Verbindungskörper 1 und wirkt einem Verschieben der beiden Gebäudeelemente 2,3 beim Einschrauben der wenigstens einen Verbindungsschraube entgegen. Der Gegenverbindungskörper 17 weist eine weitere Befestigungseinrichtung 19 auf, welche beispielsweise als wenigstens eine Befestigungsschraubenführung ausgebildet sein kann. Weiters kann vorgesehen sein, dass in den Befestigungsschraubenführungen Befestigungsschrauben angeordnet sind, welche den Gegenverbindungskörper 17 mit dem zweiten Gebäudebauelement 3 verbinden.

Hierfür kann vorgesehen sein, dass bei dem Verbindungskörper 1 an der ersten Seitenfläche 6 eine Positionierkörperaufnahme 15 zur Aufnahme eines Positionierkörpers 16 angeordnet ist.

Alternativ kann vorgesehen sein, dass an der ersten Seitenfläche 6 ein Positionierkörper 16 angeformt ist. Hierbei kann der Verbindungskörper 1 und der Positionierkörper 16 einstückig geformt sein.

Weiters kann vorgesehen sein, dass der Positionierkörper 16 am Gegenverbindungskörper 17 angeformt ist.

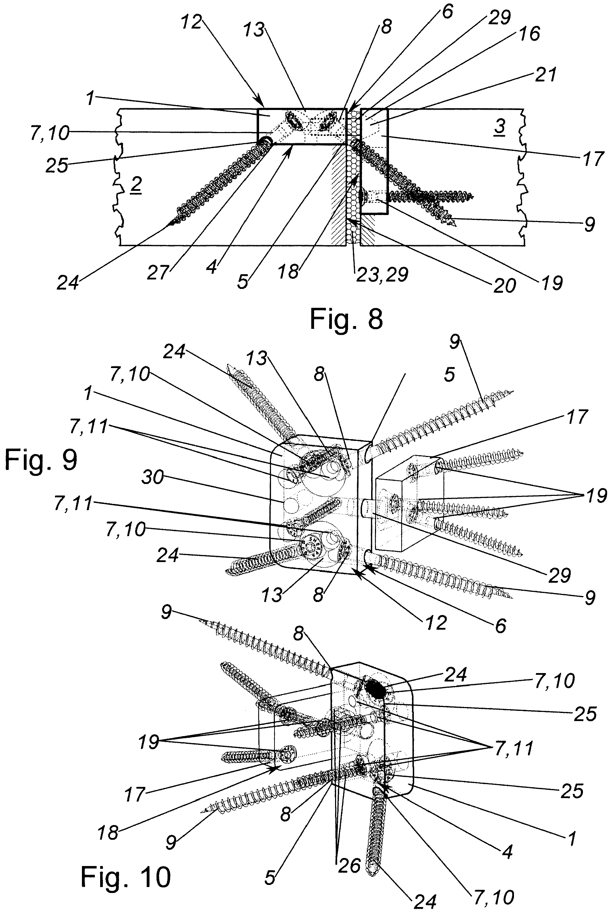

In einem zusammengesteckten Zustand der bevorzugten Ausführungsform eines Verbindungssystems, welches beispielsweise in Fig. 9 und 10 dargestellt ist, kann hierbei vorgesehen sein, dass der Positionierkörper 16 in der Positionierkörperaufnahme 15 des Verbindungskörpers 1 und der weiteren Positionierkörperaufnahme 21 des Gegenverbindungskörpers 17 angeordnet ist und diese beiden Körper dadurch zueinander ausrichtet.

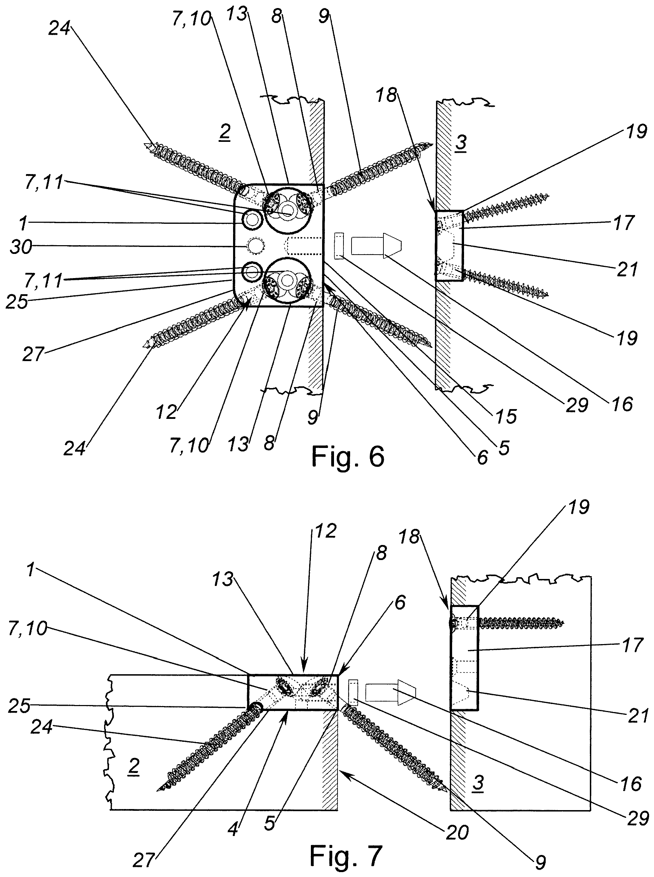

Hierbei ist besonders bevorzugt vorgesehen, dass der Positionierkörper 16 und eine der Positionierkörperaufnahmen 15,21 derart ausgebildet sind, dass der Verbindungskörper 1 und der Gegenverbindungskörper 17 lediglich in einer oder zwei Raumrichtungen zueinander ausgerichtet werden, und in den verbleibenden Raumrichtungen eine vorgebbare Beweglichkeit aufweisen. Beispielsweise kann die weitere Positionierkörperaufnahme 21 wie in Fig. 6 und Fig. 7 dargestellt länglich ausgebildet sein. Dies ist vorteilhaft, um das Zusammenfügen der beiden Gebäudeelemente 2,3 zu erleichtern und um Fertigungstoleranzen zu gestatten, wobei in zumindest einer Raumrichtung eine Führung gegeben ist.

Weiters kann vorgesehen sein, dass der Positionierkörper 16 an dem Verbindungskörper 1 oder dem Gegenverbindungskörper 17 lösbar befestigt ist, während der Positionierkörper 16 in den gegenüberliegenden Verbindungskörper 1 oder den Gegenverbindungskörper 17, insbesondere lediglich hinterschneidungsfrei, eingreift. Ein hinterschneidungsfreier Eingriff bedeutet in diesem Zusammenhang, dass der jeweilige Eingriff des Positionierkörpers 16 keinen Hinterschnitt in Richtung der Normalen auf die Stoßfläche 20 gesehen aufweist.

Hierbei kann der Positionierungskörper 16 bevorzugt an einem ersten Ende konisch geformt sein, und insbesondere an einem gegenüberliegenden zweiten Ende ein Gewinde aufweisen.

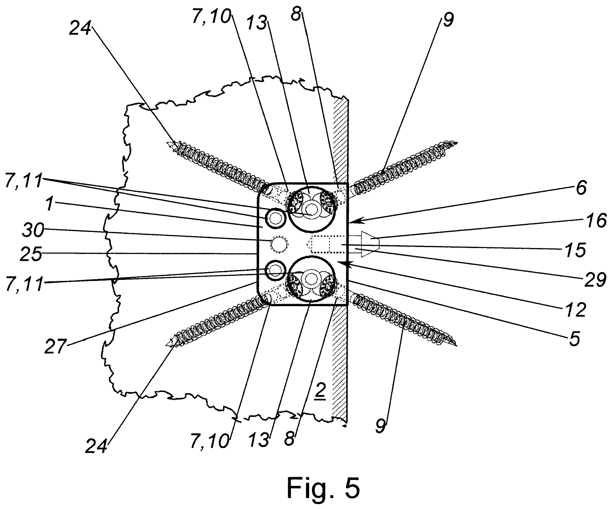

Fig. 5 zeigt eine bevorzugte Ausführungsform des Verbindungskörpers 1, wobei ein Positionierkörper 16 in der Positionierkörperaufnahme 15 angeordnet ist und über die erste Ebene hinausragt.

Fig. 6 und 7 zeigen eine bevorzugte Ausführungsform des Verbindungssystems als Explosionsdarstellung. Durch den Positionierkörper 16 und den Gegenverbindungskörper 17 können für eine Montage in einen vorbereitenden Schritt zunächst der Verbindungskörper 1 und der Gegenverbindungskörper 17 an den jeweiligen Gebäudebauelementen 2,3 befestigt werden. Weiters kann der Positionierkörper 16 an dem Verbindungskörper 1 oder dem Gegenverbindungskörper 17 angebracht werden. Bei der Montage kann bei Zusammenführen der beiden Gebäudebauelementen 2,3 der Positionierkörper 16 in die Positionierkörperaufnahme 15 oder die weitere Positionierkörperaufnahme 21 des gegenüberliegenden Verbindungskörpers 1 oder Gegenverbindungskörper 17 eingefügt werden, wodurch die beiden Gebäudebauelementen 2,3 durch den Positionierkörper zueinander ausgerichtet sind. In einem nachfolgenden Schritt können die Verbindungsschrauben 9 eingeschraubt werden und dadurch das erste Gebäudebauelement 2 mit dem zweiten Gebäudebauelement 3 verbunden werden.

Hierbei kann besonders bevorzugt eine Verbindung erzielt werden bei welcher vorgesehen sein kann, dass am zweiten Gebäudebauelement 3 der Gegenverbindungskörper 17 befestigt ist, dass der Gegenverbindungskörper 17 die dem ersten Gebäudebauelement 2 zugewandte Positionierungsfläche 18 mit der weiteren Positionierkörperaufnahme 21 aufweist, dass die weitere Positionierkörperaufnahme 21 fluchtend zu der in der ersten Seitenfläche 6 angeordneten Positionierkörperaufnahme 15 angeordnet ist, und dass der Positionierkörper 16 in die Positionierkörperaufnahme 15 und/oder die weitere Positionierkörperaufnahme 21, insbesondere lediglich hinterschneidungsfrei, eingreift.

Besonders bevorzugt kann vorgesehen sein, dass ein Überstand, mit welchem Überstand der Positionierkörper 16 über die erste Seitenfläche 6 hinaus ragt, vorgebbar verstellbar ist. Dies kann beispielsweise durch ein Gewinde an dem Positionierkörper 16 erreicht werden. Alternativ kann vorgesehen sein, dass um den Positionierkörper 16 eine Distanzhülse 29 angeordnet ist, wobei die Länge der Distanzhülse 29 den Überstand vorgibt. Dabei kann der Abstand zwischen der ersten Seitenfläche 6 und der Positionierungsftäche 18 vorgegeben werden, wodurch auch eine Fugenbreite zwischen den beiden Gebäudebauelementen 2,3 gut vorgegeben werden kann.

Bei zwei miteinander verbundenen Gebäudebauelementen 2,3 kommt es in der Regel zu einer Übertragung von Körperschall, also einer Körperschallübertragung, an der Verbindung. Die Körperschallübertragung ist eine Übertragung eines Körperschalls, also akustischen Körperschwingungen, von dem ersten Gebäudebauelement 2 auf das zweite Gebäudebauelement 2. Bei einer starren Verbindung zwischen den beiden Gebäudebauelementen 2,3 kann hierbei ein großer Teil des Körperschalls beispielsweise an der Stoßfläche 20 und über die Verbindungsschrauben 9 übertragen werden.

Zum Zwecke des Lärmschutzes kann es hierbei vorgesehen sein, die Körperschallübertragung zwischen den beiden Gebäudebauelementen 2,3 vorgebbar zu reduzieren.

Insbesondere kann bei einer Verbindung vorgesehen sein, dass zwischen dem ersten Gebäudebauelement 2 und dem zweiten Gebäudebauelement 3 eine Fuge 23 mit einer vorgebbaren Breite angeordnet ist. Durch diese Fuge 23 kann beispielsweise das erste Gebäudebauelement 2 von dem zweiten Gebäudebauelement 3 bezüglich einem Körperschall getrennt werden. Die Breite der Fuge 23 kann beispielsweise durch den Positionierkörper 16 vorgegeben sein.

Weiters kann vorgesehen sein, dass zwischen dem ersten Gebäudebauelement 2 und dem zweiten Gebäudebauelement 3 eine Körperschalldämmmasse 29 angeordnet ist. Durch die in der Fuge 23 angeordnete Körperschalldämmmasse 29 kann eine Körperschallübertragung an der Stoßfläche 20 reduziert werden.

Besonders bevorzugt kann vorgesehen sein, dass eine Körperschallübertragung zwischen dem ersten Gebäudebauelement 2 und dem zweiten Gebäudebauelement 3 mittels einer Körperschalldämmeinrichtung 22 gedämmt ist. Die Körperschalldämmeinrichtung 22 ist dazu ausgebildet, eine Übertragung des Körperschalls zwischen den beiden Gebäudebauelementen 2,3 über den Verbindungskörper 1 oder das Verbindungssystem zu dämpfen.

Hierbei kann insbesondere vorgesehen sein, dass der Verbindungskörper 1 eine Körperschalldämmeinrichtung 22 aufweist. Die Körperschalldämmeinrichtung 22 kann insbesondere Teil des Verbindungskörpers 1 sein.

Weiters kann vorgesehen sein, dass die Körperschalldämmeinrichtung 22 Teil des Gegenverbindungskörpers 17 und/oder des Verbindungssystems ist.

Die Körperschalldämmeinrichtung 22 kann eine Vielzahl an Körperschalldämmelementen aufweisen. Die Körperschalldämmelemente können insbesondere ein oder mehrstückige Körper aus einem Material mit hoher innerer Dämpfung sein. Die innere Dämpfung kann hierbei insbesondere im Frequenzbereich zwischen 20 Hz und 20.000 Hz, besonders bevorzugt im Bassbereich zwischen 20 Hz und 200 Hz, besonders hoch sein. Weiters können Körperschalldämmelemente mit hoher innerer Dämpfung bei Infraschallfrequenzen, welche kleiner als 20 Hz sind, verwendet werden. Dem Fachmann sind hierbei eine Vielzahl an unterschiedlichen Materialien zum Zwecke der Körperschallsämpfung bekannt, beispielsweise Gummi, Schaumstoff oder Elastomere. Weiters können die Körperschalldämmelemente auch Federn umfassen. Auch eine Kombination unterschiedlich ausgebildeter Körperschalldämmelemente kann vorgesehen sein.

Hierbei können die Körperschalldämmelemente der Körperschalldämmeinrichtung 22 am Grundkörper des Verbindungskörpers 1 befestigt, insbesondere angeklebt sein, dadurch wird der Montage weiter vereinfacht, da der zusätzliche Schritt des Aufbringens von Körperschalldämmelementen entfällt. Weiters können die Körperschalldämmelemente dadurch maschinell platziert werden, wodurch deren Anordnung am Grundkörper des Verbindungskörpers 1 besonders gut reproduzierbar vorgebbar ist.

Vorzugsweise kann vorgesehen sein, dass die Körperschalldämmeinrichtung 22 eine Dämmschicht 30 aufweist, und dass die Dämmschicht 30 zwischen dem Verbindungskörper 1 und dem ersten Gebäudebauelement 2 und/oder zwischen dem Gegenverbindungskörper 17 und dem zweiten Gebäudebauelement 3 angeordnet ist. Diese Dämmschicht 30 stellt hierbei ein Körperschalldämmelement der Körperschalldämmeinrichtung 22 dar. Durch die Dämmschicht 30 kann eine direkte Körperschallübertragung über Grenzfläche zwischen dem Verbindungskörper 1 und dem ersten Gebäudebauelement 2 und/oder zwischen dem Gegenverbindungskörper 17 und dem zweiten Gebäudebauelement 3 verringert werden.

Hierbei kann insbesondere vorgesehen sein, dass die Körperschalldämmeinrichtung 22 eine Dämmschicht 30 aufweist, und dass die Dämmschicht 30 zumindest die Kontaktfläche 4 wenigstens teilweise abdeckt. Die Dämmschicht 30 kann hierbei auf dem Grundkörper des Verbindungskörpers befestigt sein.

Weiters kann vorgesehen sein, dass die Dämmschicht 30 an einer Oberfläche eines Grundkörpers des Gegenverbindungskörpers 17 befestigt ist.

Weiters kann vorgesehen sein, dass die Körperschalldämmeinrichtung 22 wenigstens eine Schraubenkopfdämmeinlage 31 aufweist. Diese Schraubenkopfdämmeinlage 31 stellt hierbei ein Körperschalldämmelement der Körperschalldämmeinrichtung 22 dar. Die Schraubenkopfdämmeinlage 31 ist eine Einlage welche vorzugsweise im Bereich eines Schraubkopfes zwischen einer Schraube und der Schraubenführungsöffnung des Grundkörpers angeordnet ist, und einen direkten Kontakt zwischen der Schraube und dem Grundkörper unterbindet. Hierbei kann eine Körperschallübertragung zwischen der Schraube und dem Grundkörper unterbunden gedämpft werden. Die Schraubenführungsöffnung kann hierbei eine Durchführungsöffnung des Grundkörpers für die Verbindungsschraubenführung 8, Befestigungsschraubenführung 10, die Positionierungsschraubenführung 11 und dergleichen sein.

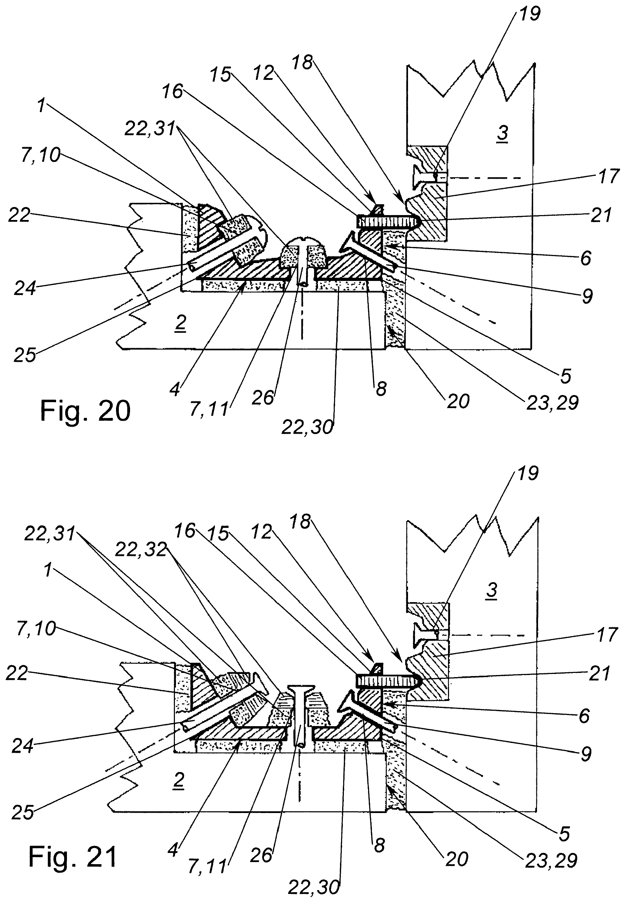

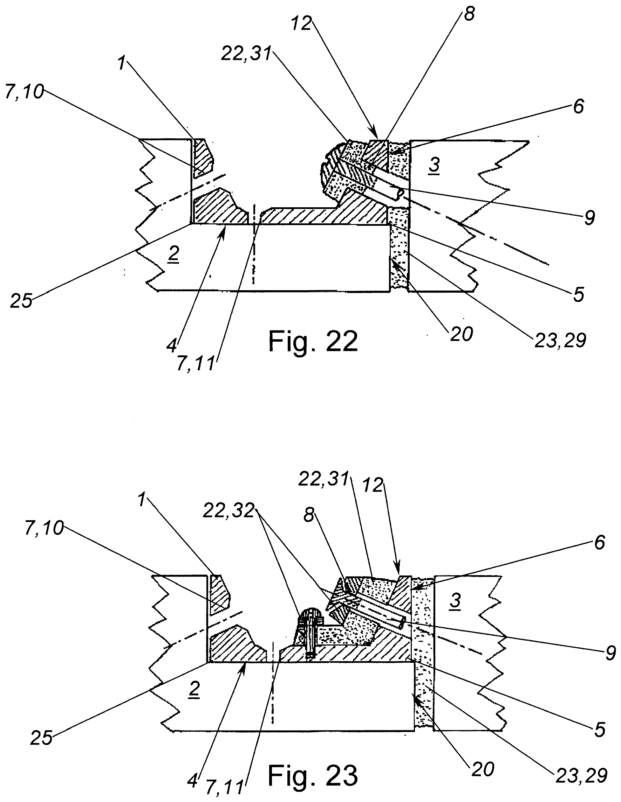

Gemäß den bevorzugten Ausführungsformen in Fig. 20 und 22 kann vorgesehen sein, dass eine Schraube durch die Schraubenkopfdämmeinlage 31 geführt ist. Hierbei kann beispielsweise die Schraubenkopfdämmeinlage 31 die Verbindungsschraubenführung 8 für die Verbindungsschraube 9 ausbilden, da der Grundkörper die Verbindungsschraube 9 nicht berührt.

Hierbei kann insbesondere die Schraubenkopfdämmeinlage 31 in die jeweilige Schraubenführungsöffnung des Grundkörpers hinein ragen, um einen direkten Kontakt zwischen dem Verbindungskörper 1 oder dem Gegenverbindungskörper 17 und der jeweiligen Schraube zu unterbinden. Hierbei kann eine Körperschallübertragung vom Verbindungskörper 1 oder dem Gegenverbindungskörper 17 an das jeweilige Gebäudebauelement 2,3 über die Schrauben verringert werden.

Weiters kann vorgesehen sein, dass auf der Schraubenkopfdämmeinlage 31 ein Schraubenkopfauflagekörper 32 angeordnet ist. Der Schraubenkopfauflagekörper 32 kann hierbei aus einem starren Material sein, beispielsweise aus Metall oder Hartplastik, wobei ein Schraubenkopf auf dem Schraubenkopfauflagekörper 32 aufliegt, wodurch der Schraubenkopfauflagekörper 32 die Druckbelastung durch den Schraubenkopf großflächig auf die Schraubenkopfdämmeinlage 31 weiterleiten kann. Hierbei kann die Schraubenkopfdämmeinlage 31 vor einer Beschädigung beschützt werden. Weiters kann verhindert werden, dass die durch die jeweilige Schraube hergestellte Verbindung durch ein Eingraben des Schraubenkopfes in die üblicherweise weiche und nachgiebige Schraubenkopfdämmeinlage 31 gelockert wird.

Hierbei kann vorgesehen sein, dass die Körperschalldämmeinrichtung 22 des Verbindungskörpers 1 wenigstens eine Schraubenkopfdämmeinlage 31 aufweist, und dass auf der Schraubenkopfdämmeinlage 31 insbesondere ein Schraubenkopfauflagekörper 32 angeordnet ist. Die wenigstens eine Schraubenkopfdämmeinlage 31 kann insbesondere am Grundkörper des Verbindungskörpers 1 befestigt sein, wobei der Schraubenkopfauflagekörper 32 auf der jeweiligen Schraubenkopfdämmeinlage 31 befestigt ist.

Weiters kann vorgesehen sein, dass der Positionierkörper 16 an zumindest einer Seite an einem Körperschalldämmelement der Körperschalldämmeinrichtung 22 aufliegt, um eine Körperschallübertragung zwischen dem Verbindungskörper 1 und dem Gegenverbindungskörper 17 oder dem zweiten Gebäudebauelement 3 zu reduzieren.

Fig. 20 bis Fig. 30 zeigen insbesondere bevorzugte Ausführungsformen der Verbindung, des Verbindungssystems und/oder des Verbindungskörpers 1 mit unterschiedlich ausgebildeten Körperschalldämmeinrichtungen 22. Zum Zecke der besseren Klarheit der Darstellungen sind einige Schraubenköpfe leicht herausgeschraubt dargestellt. Weiters sind einige Schrauben nicht vollständig dargestellt, oder lediglich durch deren Mittelachse angedeutet.

Gemäß Fig. 20 und Fig. 21 kann insbesondere vorgesehen sein, der Verbindungskörper 1 lediglich über die Körperschalldämmeinrichtung 22 mit dem ersten Gebäudebauelement 2 verbunden ist. Hierbei kann der Verbindungskörper 1 starr mit dem zweiten Gebäudebauelement 3 verbunden sein, wobei eine Übertragung des Körperschalls von dem Grundkörper des Verbindungskörpers 1 an das erste Gebäudebauelement 2 durch die Körperschalldämmeinrichtung 22 verringert wird. Die Körperschalldämmeinrichtung 22 umfasst hierbei eine Dämmschicht 30 zwischen dem Grundkörper des Verbindungskörpers 1 und dem ersten Gebäudebauelement 2 sowie Schraubenkopfdämmeinlagen 31, welche eine Übertragung des Körperschalls von den mit dem ersten Gebäudebauelement 2 verbundenen Schrauben zu dem Grundkörper des Verbindungskörpers 1 verringern.

Fig. 21 stellt hierbei eine bevorzugte Ausführungsform mit Schraubenkopfauflagekörpern 32 dar.

Gemäß Fig. 22 bis Fig. 30 kann insbesondere vorgesehen sein, der Verbindungskörper 1 lediglich über die Körperschalldämmeinrichtung 22 mit dem zweiten Gebäudebauelement 3 verbunden ist. Hierbei kann der Verbindungskörper 1 starr mit dem ersten Gebäudebauelement 2 verbunden sein.

Hierbei kann insbesondere eine Übertragung des Körperschalls von der wenigstens einen Verbindungsschraube 9 zu dem Grundkörper des Verbindungskörpers 1 mittels einer Schraubenkopfdämmeinlage 31 gedämmt werden.

In Fig. 22, Fig. 23 und Fig. 28 sind bevorzugte Ausführungsformen ohne Gegenverbindungskörper 17 dargestellt.

Gemäß Fig. 23 kann weiters vorgesehen sein, dass die Schraubenkopfdämmeinlage 31 mittels einer zusätzlichen Montageschraube am Grundkörper des Verbindungskörpers 1 befestigt ist.

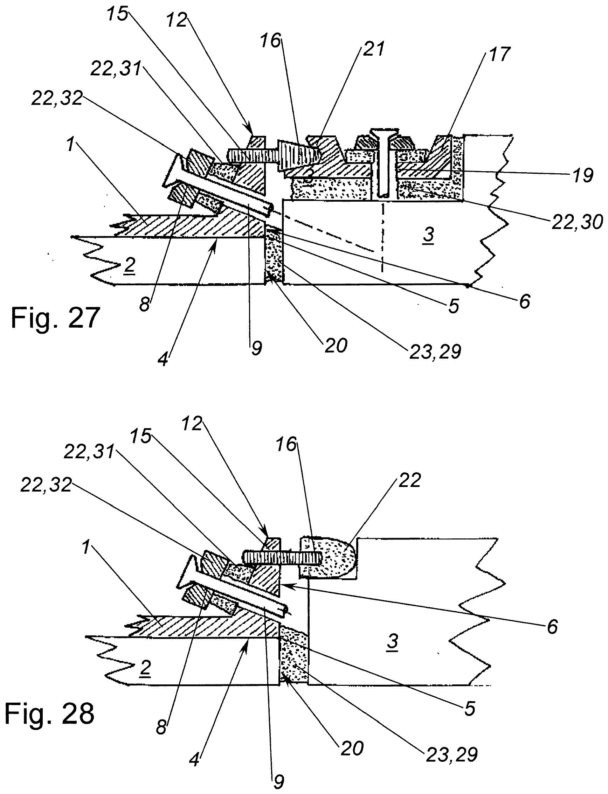

Gemäß Fig. 28 kann insbesondere vorgesehen sein, dass der Positionierkörper 16 mittels eines Körperschalldämmelementes auf dem zweiten Gebäudebauelement 3 aufliegt.

Gemäß der bevorzugten Ausführungsform in Fig. 27 kann weiters vorgesehen sein, dass der Gegenverbindungskörper 17 lediglich über die Körperschalldämmeinrichtung 22 mit dem zweiten Gebäudebauelement 3 verbunden ist. Hierbei kann der Positionierkörper 16 direkt am Verbindungskörper 1 und am Gegenverbindungskörper 17 aufliegen.

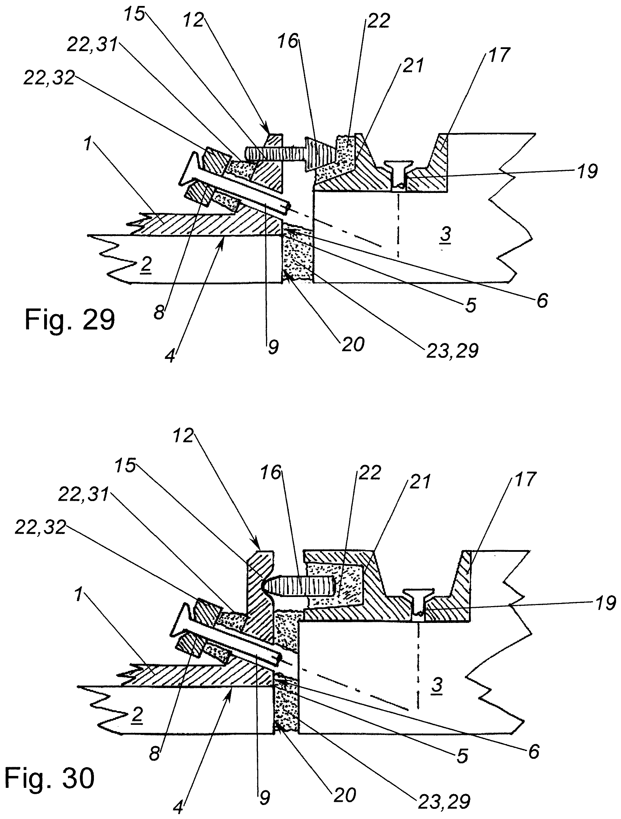

Gemäß den bevorzugten Ausführungsformen in Fig. 29 und 30 kann vorgesehen sein, der Verbindungskörper 1 lediglich über die Körperschalldämmeinrichtung 22 mit dem Gegenverbindungskörper 17 in Kontakt ist. Hierbei kann der Verbindungskörper 1 starr mit dem ersten Gebäudebauelement 2, und der Gegenverbindungskörper 17 starr mit dem zweiten Gebäudebauelement 3 verbunden sein.

Gemäß Fig. 29 kann hierbei vorgesehen sein, dass der Positionierkörper 16 am Verbindungskörper 1 befestigt ist und über ein Körperschalldämmelement der Körperschalldämmeinrichtung 22 auf dem Gegenverbindungskörper 17 aufliegt.

Gemäß Fig. 30 kann alternativ vorgesehen sein, dass der Positionierkörper 16 am Verbindungskörper 1 aufliegt und beim Gegenverbindungskörper 17 in einem Körperschalldämmelement der Körperschalldämmeinrichtung 22 befestigt ist.

Gemäß der bevorzugten Ausführungsform in Fig. 24 bis 26 kann besonders bevorzugt vorgesehen sein, dass der Positionierkörper 16 an dem Schraubenkopfauflagekörper 32 der wenigstens einen Verbindungsschraube 9 befestigt ist. Hierbei liegt der Schraubenkopf der wenigstens einen Verbindungsschraube 9 auf dem Schraubenkopfauflagekörper 32 auf, wobei der Schraubenkopfauflagekörper 32 über eine Schraubenkopfdämmeinlage 31 mit dem Grundkörper des Verbindungskörpers 1 verbunden ist. Der Positionierkörper 16 ist an diesem Schraubenkopfauflagekörper 32 befestigt, insbesondere verschraubt, und führt bevorzugt durch eine Öffnung zu dem Gegenverbindungskörper 17. Vorteilhaft hierbei ist, dass beim Verschrauben der wenigstens einen Verbindungsschraube 9 der Schraubenkopfauflagekörper 32 bezüglich dem Gegenverbindungskörper 17, und damit verbunden auch dem zweiten Gebäudebauelement 3, unnachgiebig gelagert ist, wodurch eine genaue Verschraubung der Verbindungsschraube 9 möglich ist.

## Patentansprüche

1. Verbindungskörper (1) zum Herstellen einer Verbindung zwischen einem ersten Gebäudebauelement (2) und einem zweiten Gebäudebauelement (3), wobei der Verbindungskörper (1) eine Kontaktfläche (4) zum Aufliegen auf dem ersten Gebäudebauelement (2) aufweist, wobei an einer geraden ersten Kante (5) der Kontaktfläche (4) eine eine erste Ebene aufspannende erste Seitenfläche (6) angrenzt, wobei der gesamte Verbindungskörper (1) lediglich auf einer Seite der ersten Ebene angeordnet ist, wobei eine Befestigungseinrichtung (7) zum Verbinden des Verbindungskörpers (1) mit dem ersten Gebäudebauelement (2) vorgesehen ist, wobei wenigstens eine eine Verbindungsschraubenführungsmittelachse aufweisende Verbindungsschraubenführung (8) mit einem ersten Durchmesser zur Aufnahme einer Verbindungsschraube (9) zur Verbindung des Verbindungskörpers (1) mit dem zweiten Gebäudeelement (3) vorgesehen ist, wobei ein Abstand eines Schnittpunktes der Verbindungsschraubenführungsmittelachse mit der ersten Ebene von der ersten Kante (5) kleiner als ein Fünffaches des ersten Durchmessers ist, **dadurch gekennzeichnet, dass** die Verbindungsschraubenführungsmittelachse zum Vorbeiführen der Verbindungsschraube (9) an dem ersten Gebäudeelement (2) durch die erste Seitenfläche (6) führt.

2. Verbindungskörper (1) nach Anspruch 1, **dadurch gekennzeichnet, dass** die Befestigungseinrichtung (7) wenigstens eine eine Befestigungsschraubenführungsmittelachse aufweisende Befestigungsschraubenführung (10) aufweist, und dass die Befestigungsschraubenführungsmittelachse mit der ersten Ebene einen Winkel kleiner als 80°, insbesondere zwischen 30° und 60°, einschließt.

3. Verbindungskörper (1) nach Anspruch 1 oder 2, **dadurch gekennzeichnet, dass** der Verbindungskörper (1) wenigstens einen Hinterschneidungsfortsatz (14) aufweist.

4. Verbindungskörper (1) nach einem der Ansprüche 1 bis 3, **dadurch gekennzeichnet, dass** an der ersten Seitenfläche (6) eine Positionierkörperaufnahme (15) zur Aufnahme eines Positionierkörpers (16) angeordnet ist.

5. Verbindungskörper (1) nach einem der Ansprüche 1 bis 4, **dadurch gekennzeichnet, dass** der Verbindungskörper (1) eine Körperschalldämmeinrichtung (22) aufweist.

6. Verbindungskörper (1) nach Anspruch 5, **dadurch gekennzeichnet, dass** die Körperschalldämmeinrichtung (22) eine Dämmschicht (30) aufweist, und dass die Dämmschicht (30) zumindest die Kontaktfläche (4) wenigstens teilweise abdeckt.

7. Verbindungskörper (1) nach Anspruch 5 oder 6, **dadurch gekennzeichnet, dass** die Körperschalldämmeinrichtung (22) wenigstens eine Schraubenkopfdämmeinlage (31) aufweist

8. Verbindungskörper (1) nach Anspruch 7, **dadurch gekennzeichnet, dass** auf der Schraubenkopfdämmeinlage (31) ein Schraubenkopfauflagekörper (32) angeordnet ist.

9. Verbindung zwischen einem ersten Gebäudebauelement (2) und einem zweiten Gebäudebauelement (3), wobei ein Verbindungskörper (1) gemäß einem der Ansprüche 1 bis 8 mit der Kontaktfläche (4) zumindest mittelbar auf dem ersten Gebäudebauelement (2) aufliegt und mit der Befestigungseinrichtung (7) mit dem ersten Gebäudebauelement (2) befestigt ist, wobei eine in der Verbindungsschraubenführung (8) angeordnete Verbindungsschraube (9) in das zweite Gebäudebauelement (3) führt.

10. Verbindung nach Anspruch 9 **dadurch gekennzeichnet, dass** das erste Gebäudebauelement (2) eine dem zweiten Gebäudebauelement (3) zugewandte Stoßfläche (20) aufweist, und dass eine durch die Stoßfläche (20) aufgespannte Ebene an dem Verbindungskörper (1) vorbei führt.

11. Verbindung nach Anspruch 9 oder 10, **dadurch gekennzeichnet, dass** das erste Gebäudebauelement (2) eine Umhüllende aufweist, und dass der Verbindungskörper (1) innerhalb der Umhüllenden angeordnet ist.

12. Verbindung nach einem der Ansprüche 9 bis 11, **dadurch gekennzeichnet, dass** am zweiten Gebäudebauelement (3) ein Gegenverbindungskörper (17) befestigt ist, dass der Gegenverbindungskörper (17) eine dem ersten Gebäudebauelement (2) zugewandte Positionierungsfläche (18) mit einer weiteren Positionierkörperaufnahme (21) aufweist, dass die weitere Positionierkörperaufnahme (21) fluchtend zu einer in der ersten Seitenfläche (6) angeordneten Positionierkörperaufnahme (15) angeordnet ist, und dass ein Positionierkörper (16) in die Positionierkörperaufnahme (15) und/oder die weitere Positionierkörperaufnahme (21), insbesondere hinterschneidungsfrei, eingreift.

13. Verbindung nach einem der Ansprüche 9 bis 12, **dadurch gekennzeichnet, dass** eine Körperschallübertragung zwischen dem ersten Gebäudebauelement (2) und dem zweiten Gebäudebauelement (3) mittels einer Körperschalldämmeinrichtung (22) gedämmt ist.

## Claims

1. A connecting body (1) for producing a connection between a first building component (2) and a second building component (3), wherein the connecting body (1) has a contact surface (4) for resting on the first building component (2), wherein a first lateral surface (6) defining a first plane adjoins a straight first edge (5) of the contact surface (4), wherein the entire connecting body (1) is arranged only on one side of the first plane, wherein a fastening device (7) for connecting the connecting body (1) to the first building component (2) is provided, wherein at least one connecting screw guide (8) having a connecting screw guide central axis is provided with a first diameter for accommodating a connecting screw (9) for connecting the connecting body (1) to the second building element (3), wherein a distance of a point of intersection of the connecting screw guide central axis with the first plane from the first edge (5) is less than a fifth of the first diameter, **characterized in that** the connecting screw guide central axis leads to the guidance of the connecting screw (9) past the first building element (2) through the first lateral surface (6).

2. A connecting body (1) according to claim 1, **characterized in that** the fastening device (7) has at least one fastening screw guide (10) having a fastening screw guide central axis, and that the fastening screw guide central axis encloses an angle with the first plane which is less than 80°, in particular between 30° and 60°.

3. A connecting body (1) according to claim 1 or 2, **characterized in that** the connecting body (1) has at least one undercutting extension (14).

4. A connecting element (1) according to one of claims 1 to 3, **characterized in that** a positioning body receptacle (15) for accommodating a positioning body (16) is arranged on the first lateral surface (6).

5. A connecting element (1) according to one of claims 1 to 4, **characterized in that** the connecting body (1) has a structure-borne sound-insulation device (22).

6. A connecting body (1) according to claim 5, **characterized in that** the structure-borne sound-insulation device (22) has an insulation layer (30), and the insulation layer (30) at least partially covers the contact surface (4).

7. A connecting body (1) according to claim 5 or 6, **characterized in that** the structure-borne sound-insulation device (22) has at least one screw-head damping insert (31).

8. A connecting body (1) according to claim 7, **characterized in that** a screw head support body (32) is arranged on the screw-head damping insert (31).

9. A connection between a first building component (2) and a second building component (3), wherein a connecting body (1) according to one of claims 1 to 8 rests with the contact surface (4) at least indirectly on the first building component (2) and is fastened with the fastening device (7) to the first building component (2), wherein a connecting screw (9) arranged in the connecting screw guide (8) leads into the second building component (3).

10. A connection according to claim 9, **characterized in that** the first building component (2) has an abutting surface (20) facing the second building component (3), and that a plane defined by the abutting surface (20) leads past the connecting body (1).

11. A connection according to claim 9 or 10, **characterized in that** the first building component (2) has an envelope, and that the connecting body (1) is arranged within the envelope.

12. A connection according to one of claims 9 to 11, **characterized in that** a counterconnecting body (17) is fastened to the second building component (3), the counterconnecting body (17) comprises a positioning surface (18) facing the first building component (2) and having a further positioning body receptacle (21), the further positioning body receptacle (21) is arranged in alignment with a positioning body receptacle (15) arranged in the first lateral surface (6), and a positioning body (16) engages in the positioning body receptacle (15) and/or the further positioning body receptacle (21), especially free from undercutting.

13. A connection according to one of claims 9 to 12, **characterized in that** a structure-borne sound transmission is insulated between the first building component (2) and the second building component (3) by means of a structure-borne sound-insulation device (22).

## Revendications

1. Élément de liaison (1) destiné à créer une liaison entre un premier élément de bâtiment (2) et un deuxième élément de bâtiment (3), lequel élément de liaison (1) présente une surface de contact (4) destinée à reposer sur le premier élément de bâtiment (2), une première surface latérale (6) qui décrit un premier plan étant limitrophe d'un premier bord droit (5) de la surface de contact (4), l'ensemble de l'élément de liaison (1) étant disposé seulement sur un côté du premier plan, un dispositif de fixation (7) étant prévu pour relier l'élément de liaison (1) au premier élément de bâtiment (2), au moins un guide de vis de liaison (8) d'un premier diamètre qui présente un axe médian de guide de vis de liaison étant prévu pour recevoir une vis de liaison (9) afin de relier l'élément de liaison (1) au deuxième élément de bâtiment (3), une distance entre une intersection de l'axe médian de guide de vis de liaison avec le premier plan et le premier bord (5) étant inférieure à cinq fois le premier diamètre, **caractérisé en ce que** l'axe médian de guide de vis de liaison passe à travers la première surface latérale (6) pour faire passer la vis de liaison (9) devant le premier élément de bâtiment (2) à travers la première surface latérale (6).

2. Élément de liaison (1) selon la revendication 1, **caractérisé en ce que** le dispositif de fixation (7) présente un guide de vis de fixation (10) avec un axe médian de guide de vis de fixation et **en ce que** l'axe médian de guide de vis de fixation forme avec le premier plan un angle inférieur à 80°, de préférence compris entre 30° et 60°.

3. Élément de liaison (1) selon la revendication 1 ou 2, **caractérisé en ce que** l'élément de liaison (1) présente au moins une saillie en contre-dépouille (14).

4. Élément de liaison (1) selon l'une des revendications 1 à 3, **caractérisé en ce qu'**un logement d'organe de positionnement (15) est disposé sur la première surface latérale (6) pour recevoir un organe de positionnement (16).

5. Élément de liaison (1) selon l'une des revendications 1 à 4, **caractérisé en ce que** l'élément de liaison (1) présente un dispositif d'amortissement du bruit de structure (22).

6. Élément de liaison (1) selon la revendication 5, **caractérisé en ce que** le dispositif d'amortissement du bruit de structure (22) présente une couche d'amortissement (30) et **en ce que** la couche d'amortissement (30) couvre au moins partiellement la surface de contact (4).

7. Élément de liaison (1) selon la revendication 5 ou 6, **caractérisé en ce que** le dispositif d'amortissement du bruit de structure (22) présente au moins un insert d'amortissement des têtes de vis (31)

8. Élément de liaison (1) selon la revendication 7, **caractérisé en ce qu'**un organe d'appui des têtes de vis (32) est disposé sur l'insert d'amortissement des têtes de vis (31).

9. Liaison entre un premier élément de bâtiment (2) et un deuxième élément de bâtiment (3), dans laquelle un élément de liaison (1) selon l'une des revendications 1 à 8 repose au moins indirectement par la surface de contact (4) sur le premier élément de bâtiment (2) et est fixé avec le dispositif de fixation (7) au premier élément de bâtiment (2), une vis de liaison (9) disposée dans le guide de vis de liaison (8) menant dans le deuxième élément de bâtiment (3).

10. Liaison selon la revendication 9, **caractérisée en ce que** le premier élément de bâtiment (2) présente une surface de butée (20) orientée vers le deuxième élément de bâtiment (3) et **en ce qu'**un plan traversant la surface de butée (20) passe devant l'élément de liaison (1).

11. Liaison selon la revendication 9 ou 10, **caractérisée en ce que** le premier élément de bâtiment (2) présente une enveloppante et **en ce que** l'élément de liaison (1) est disposé à l'intérieur de l'enveloppante.

12. Liaison selon l'une des revendications 9 à 11, **caractérisée en ce qu'**un élément de liaison opposé (17) est fixé sur le deuxième élément de bâtiment (3), en que l'élément de liaison opposé (17) présente une surface de positionnement (18) tournée vers le premier élément de bâtiment (2) avec un autre logement d'organe de positionnement (21), **en ce que** l'autre logement d'organe de positionnement (21) est disposé en affleurement d'un logement d'organe de positionnement (15) disposé dans la première surface latérale (6) et **en ce qu'**un organe de positionnement (16) se met en prise dans le logement d'organe de positionnement (15) et/ou l'autre logement d'organe de positionnement (21), en particulier sans contre-dépouille.

13. Liaison selon l'une des revendications 9 à 12, **caractérisée en ce qu'**une transmission du bruit de structure entre le premier élément de bâtiment (2) et le deuxième élément de bâtiment (3) est amortie au moyen d'un dispositif d'amortissement du bruit de structure (22).
